# EUROPEAN PATENT SPECIFICATION

(11) **EP 2 911 362 B1**
(45) Date of publication and mention of the grant of the patent: **21.11.2018**
(21) Application number: 13820889.7
(22) Date of filing: 16.10.2013
(51) Int. Cl.: H04L 29/06, G06F 21/55

(54) **METHOD AND SYSTEM FOR DETECTING INTRUSION IN NETWORKS AND SYSTEMS BASED ON BUSINESS-PROCESS SPECIFICATION**
VORRICHTUNG UND VERFAHREN ZUR DETEKTION VON EINDRINGUNGEN IN NETWORKS AND SYSTEMS BASIERT AUF GESCHÄFTSPROZESSSPEZIFIKATIONEN
PROCÉDÉ ET SYSTÈME DE DÉTECTION D'INTRUSIONS DANS DES RÉSEAUX ET DES SYSTÈMES, SUR LA BASE DE LA SPÉCIFICATION DE PROCESSUS OPÉRATIONNELS

(30) Priority: 17.10.2012 PT 2012106586
(43) Date of publication of application: 26.08.2015
(73) Proprietor: INESC INOVAÇÃO-INSTITUTO DE NOVAS TECNOLOGIAS (INOV), 1000-029 Lisboa (PT)
(72) Inventor: NOBRE ESCRAVANA, Nelson, P-2785-749 São Domingos De Rana (PT); DA CRUZ RIBEIRO, Carlos Nuno, P-2030-270 Barcarena (PT); AIRES FERREIRA DE LIMA, João Pedro Paulino, P-2590-031 Sobral De Monte Agraço (PT)
(74) Representative: Ferreira, Maria Silvina
(86) International application number: PCT/IB2013/059391
(87) International publication number: WO 2014/060964

(56) References cited:
- EP-A1- 2 293 513
- US-A1- 2002 169 982
- US-A1- 2012 079 592

## Description

### Technical domain

The present application describes a method and a system for detection of intrusion attempts on networks or systems based on the specification of the business processes supported by them and/or in business rules.

### State of the Prior Art

The detection of attacks, intrusions[1] or security incidents in communications networks, information systems and control systems is performed with the support of Intrusion Detection Systems (IDS). An IDS consists on a software or computer application that monitors the activity of systems and/or communication networks with the purpose of detecting indications of intrusion attempts or cyber-attack. When an indication of an attack/intrusion is detected by an IDS, an alarm is generated.

It is usual to divide IDSs into two categories according to the way they collect the data for analysis:
- Network IDSs (NIDS): work by collecting information at a communications network level, monitoring data communications between systems, which compose it and analyzing its content to determine whether it constitutes a threat to the network and/or system's security. In this case the IDSs are installed on systems that through diverse techniques have access to the networks' communications that they monitor. A network IDS can be executed on a standard computer (PC) or specifically designed hardware, usually referred to as an appliance;
- System IDSs (host IDS or HIDS): software installed on the systems to be protected, which collects information directly from the system itself that may use several techniques such as: log analysis of operations carried out in the system, usually known as log analysis, analysis of running applications, analysis of changes on computer files, etc.

After collecting the data, these are processed by the IDS to determine the existence of threat, attack or intrusion signs. The data processing method varies significantly among different products on the market, but may be divided into the following classes:
- Signature detection: Whenever a new type of attack is discovered, or new information about possible vulnerabilities, signatures are produced identifying potentially hostile actions. The signature is a set of elements that identify with high probability that a communication, action or file having these elements corresponds to the execution of a known attack. This method, which is also used in technologies such as the antivirus, has as main disadvantage only detecting known attacks and requires constant updating of the signatures database to maintain a minimum level of protection. On the other hand, when properly used, generates a reduced number of false positives, in this case false intrusion alarms, since there is a reasonable probability that the occurrence of an attack signature is due to the existence of an attack.
- Anomaly detection: this method usually works through a learning process in which users and applications behavior patterns are previously created, and then checked to what extent the current actions on systems or networks are abnormal compared to the established pattern, i.e. the deviation from the perceived behavior is exceeds a given margin of tolerance. A major advantage of this method is the possibility to detect new attacks types for which there are still no known signatures. The main disadvantage of this method is the occurrence of a high number of false alarms either by a deviation of the observed behavior that doesn't effectively translate in an attack, or by not being able to detect attacks that do not deviate enough from the established behavior pattern.
- Specification violation detection (specification based IDS): this method is based on the comparison between the behavior of the applications and the specification of their behavior or communication protocol. The specification typically corresponds to a set of rules that define the behavior of a given application, or that define the protocol according to which the applications must communicate. One of the first specification based IDS [2] monitored the execution of privileged tasks on UNIX systems based on a set of rules of acceptable behavior. This concept was expanded [3,4,5] to monitor the execution of any application whose specification could be defined based on the interception of the application calls to the system (system calls). The same concept was also applied to communications between systems and network applications [6] and to industrial control systems, commonly known as SCADA networks [7].

There are products in the market that combine several data processing methods and aggregate information collected through several means.

In document U.S. 2011288692 A1 a method for detecting attacks on smart power grids is proposed, centered on the classification of malicious activity characterized by, collecting and pre-processing IT (Information Technology) information and not IT through the application of a specific set of predefined rules with the objective of relating an unwanted event with an IT activity and determine the probability that an unwanted event corresponds to a malicious activity. The proposed method in this application does not require a pre-defined set of rules that determine the probability of a given event to correspond to a malicious activity, in contrast it uses the specification of the business processes and/or business rules to define the normal behavior of systems and assumes that any deviation between the execution of processes and their specification corresponds to a potentially malicious behavior. Against the proposed in U.S. 2011288692 A1, the technology presented in this application has the major advantage of allowing to detect unknown attacks, i.e., for which still no rules are defined that enable to evaluate the probability of the event corresponds to a malicious activity. Additionally the proposed method in the present application can be applied in other scenarios apart from the electric smart grids, such as for example industrial systems and control systems used in critical infrastructures such as transportation.

In document U.S. 2002169982 A1 is proposed a method of an intrusion detection system operation characterized by verifying the validity of business rules to determine whether to change the signature set used to detect attacks, i.e. an intrusion detection system based on the verification of signatures of known attacks. The proposed method in the present application is characterized by being able to use the business rules itself to determine the existence of a potential intrusion. Against the proposed in U.S. 2002169982 A1, the technology presented in this application has the advantage of detecting an attack that consists in the violation of a business rule, even if the signature of the attack is unknown.

EP2293513 discloses a device and a method for protecting a network against distributed attacks at the network application layer.

### Summary

The present application describes a method of intrusion or incident detection in networks and systems, which comprises the analysis of events from networks or systems, collected through sensors (4,7), from which are extracted:
the attributes that enable to characterize and identify actions on the systems involved;
the attributes enabling to associate an action to the execution of an activity in a business process;
the attributes that allow to infer the state of informational entities;
being that the identified actions and attributes are sent to a processes validation module (12) that from the received information infers the execution of a particular activity, or activities, on a business process and taking into account the current business process state, compares the detected activities with those that are specified in the business processes determining the existence of deviations between the observed and specified activities, thus indicating a potential intrusion or incident.

In one embodiment, network or system events handled in the method are used to extract information about the status of the informational entities involved in the business processes, determining whether the modification of the informational entities state implies the violation of any of the specified business rules that involve the said informational entity therefore indicating a potential intrusion or incident.

In another embodiment, the method elaborates that for each indication of the execution of a business process that corresponds to a previously identified action is carried out the mapping in an activity of the business process and fed into a model resident in the computer memory or used to check the validity of a business rule.

In yet another embodiment, the events used for extracting information in the method are from operation logs of the computer applications, collected through system sensors.

In one embodiment, the events used to extract information in the method are from the analysis of network traffic in one or more network segments, collected through network sensors.

In a further embodiment, the events used to extract information in the method are from other systems of intrusion detection, incident detection, monitoring or alarm generation.

In yet another embodiment, the method includes a software transactional memory with support of nested transactions.

In one embodiment, the method comprises a tree structure in which in each node of the tree the data is kept for all possible instances, being that for each new action verified a child node is added to the branch of the corresponding process instance, and whenever an action fails the branch of the tree is eliminated until only one branch remains.

In a further embodiment, the method produces an alarm in case of detection of a potential intrusion or incident.

It is also presented in this application a system for intrusion or incident detection in networks and systems, that implements the method of intrusions or incident detection in networks of systems described previously comprised by a processing core (1) and a distributed set of sensors (4,7) responsible for collecting the information from networks or systems; being that the processing core is responsible for communicating with the sensors, for interpreting the configurations, including the processes specification, the business rules specification and the sensors configuration, and compares the activities detected by the sensors with those that are specified in the business processes.

In one embodiment, the business process specification is carried out by the system using one or more of the following languages: CSP, Occam, Ease, SDL, SDL-RT, UML, BPMN and BPEL.

In a further embodiment, the business rules specification is carried out by using second-order logic.

In yet another embodiment, the system shows to the operator the generated alarm, the list of steps in the business processes prior to detection of the incident or intrusion, the list of events that led to a deviation of the business process, and the state of the business process.

In one embodiment, the interface between the sensors and the system processing core uses adapters for sensors.

In a further embodiment, the communication between the sensors and the processing core of the system uses encrypted communication.

In yet another embodiment, the information extraction about the informational entities state or the execution of activities in the business processes is carried out by the system using previously defined extraction rules.

In one embodiment, the system extraction rules are represented by regular expressions.

In a further embodiment, the extraction rules indicate an absolute or relative position of data in a network packet or log file of the operation of computer application.

In yet another embodiment, the extraction rules comprise statistical characteristics of a particular network traffic property.

### General description

The present application describes a method and a system for detecting intrusion attempts in systems or networks based on the specification of the business processes supported by them.

Within this scope, it is understood by business process or organizational process a set of activities through which an organization must be structured in order to produce value. Business processes are, therefore, activities previously established whose aim is to determine how the work will be carried out in an organization. In other terms, they constitute a set of actions which are related logically and coherently to promote an output favorable to the organization, both internally as externally. Additionally, it is understood by business rule a rule that defines or limits a certain business property, and are always evaluated as true or false.

The technology now brought forward can be considered an extension of the methods of intrusion detection by occurrence of specifications violation but, contrary to the currently existent that are based on the specification of behaviors of applications and of communication protocols, the present technology is based on the analysis of the execution, according to a business specification, by different actors, whether they are applications or people, of certain actions that constitute the business processes, and the verification of the compliance with the business rules. Whenever there is a violation of the specification of a business process, such as for example, a set of actions executed out of the order by which they should be executed, or of a rule, a process of analysis will be triggered, according to previously defined criteria to determine whether or not that is a reason to generate an intrusion alarm.

The present technology has particular application in the protection of systems that participate in business processes that are completely specifiable. Noteworthy are the industrial systems and control systems used in critical infrastructures, for example electricity, transports, etc.

Through several methods or technologies, the events in each system or network are used as indication of actions on the involved systems, i.e. indications of activities in business processes, and analyzed to determine if they correspond to the execution of the business process specified in advance. In case of a deviation between the executed business process and the specified business process is detected, an alarm indicating a potential intrusion is produced.

### Description of the figures

For an easier understanding of the technique, drawings are attached, which represent preferred embodiments that, however, are not intended to limit the object of the present technique.

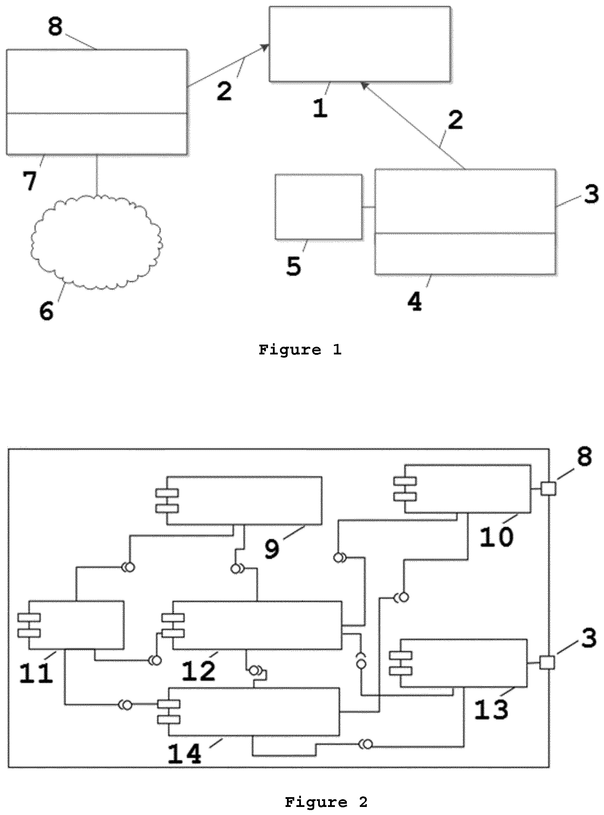

Figure 1 illustrates a typical installation scenario of the technology, comprised by a set M of system sensors (4) that monitor the M systems (5) and by N network sensors (7) that monitor the N respective networks (6) and which connect to the core (1) through adapter modules for sensors (3,8) through a network connection (2).
Figure 2 illustrates the internal architecture of the system core, being comprised by the Specifications Interpreter (9), the Sensors Configuration Manager (14), the Database (11), Processes Verification Module (12) and Sensors with Interfaces (10,13) which communicate with the adapters for sensors (8,3).

### Description of embodiments

Given the disadvantages presented by the solutions currently existent in the market, the present technology aims to minimize the number of false positives and at the same time to enable the detection of new attacks.

The present technology comprises a method and system for detection of intrusions or incidents in networks and systems, based on the validation of the correct execution of processes and specified business rules, which we will designate by system. Through several methods or technologies, the events in each system or network are used as indications of actions on the involved systems, and analyzed to determine if they correspond to the execution of the business process specified in advance. In case of a deviation between the executed business process and the specified business process is detected, an alarm is produced.

The system can use simultaneously:
- Information about events from applications logs, in order to infer the state of execution of the business processes on which the system participates, through system sensors and;
- Information of events from the analysis of network traffic in one or several network segments, through network sensors, in order to infer the execution of the business processes whose involved systems communicate through the analyzed network(s), or whose information that circulates in the analyzed networks could provide an indication of the execution of actions corresponding to the monitored business processes.

The composition of events from network sensors, and the business rules and processes logic is one of the innovative features of the proposed technology. In most of the existing IDSs the composition of events from network sensors and system sensors is something particularly difficult due to the semantic difference between the information collected through the different sensors. This problem is known as the problem of Data Fusion. The present IDS solves this problem by linking both types of events with the system's business processes and business rules, and working the detection at the highest level of the business process. Thus unlike the usual techniques of data fusion that correlate alarms produced by several types of IDS, this technology merges events in actions of the business process and detects the incidents at business processes the execution level.

The system may also include the use of other intrusion detection systems, incident detection, or monitoring and alarm generation systems, in order to infer the execution of business processes through the alerts generated by these.

The system comprises a distributed set of sensors (4,7) and a processing core (1), as illustrated in Figure 1.

The sensors have the main function of collecting information from the network and systems, by extracting:
- Indication of an action occurrence, which can subsequently be, or not, mapped in the execution of a given activity in the business process, for example the opening of train doors, or to check the validity of a business rule, by the processing core. This extraction of an action occurrence indication can be executed by an existing intrusion detection system, for example SNORT IDS, which is configured to detect these actions instead of detecting the presence of attack signatures. The use of IDS, NIDS and/or HIDS software, already on the market as being sensors that allow gauging activity in systems instead of detecting intrusions in the same allows benefiting the mechanisms of analysis developed in those existing systems. Apart from the use of existing IDS systems, the sensors may be comprised by any application capable of analyzing network traffic or the state of a given system through the analysis of logs, memory or configurations and produce as a output that a pre-specified action took place in that system.
- Alerts of a potential intrusion autonomously detected by the sensor. In this case an intrusion detection system can be used as a sensor to detect known attacks to the systems and monitored networks, specific sensors can also be developed to detect certain attack topologies;
- Information on the status of the several entities, informational entities, involved in the business process, for example the train's speed.

Both the information extraction on the state of the informational entities, as the extraction of indications about the existence of relevant actions in the process, is carried out by the sensors using predefined extraction rules which use techniques such as:
- the use of regular expressions to extract information from files or network packets;
- the data extraction at a given position, either absolute or relative of a network packet or a log file;
- the statistical analysis of a particular property of the network traffic in circulation or log file.

Figure 2 illustrates the core (1) of the system internal architecture, this being comprised of the following components, which will be described below:
- Interface with Sensors (10,13);
- Specifications Interpreter (9);
- Sensors Configuration Manager (14);
- Database (11);
- Processes Verification Module (PVM) (12).

The interface with sensors (10,13) represents the core's element responsible for communicating with each sensor (4,7) through its adapter (3,8). The sensors collect events from the several available sources (5,6) that send to the analysis central system, or core (1). To simplify the interface between the sensors (4,7) and the core (1) a plugin architecture or sensor's adapters was developed (3,8), which allows to use systems existing in the market as sensors. The sensors communicate through the adapter (3,8) with the processing core (1), the communication is carried out through a network TCP/IP channel, authenticated and encrypted, using asymmetric and symmetric encryption (2). The communication may also be carried out using the UDP protocol with encrypted and authenticated messages. The Interface with Sensors (10,13) sends to the Processes Verification Module (12) the information collected by the sensors (4,7).

The Specifications Interpreter (9) is responsible for interpreting a set of configurations and to configure the remaining elements of the system.

So that correct execution of a business process is possible to verify, the system is required to predict ways of being configured with the specification of the business processes, the business rules and the rules that allow sensors to extract relevant information about the activity concerning the systems involved. Such specification may be carried out through a loading interface and described in several languages that allows to describe activity flows. Some of the languages that can be used to specify a process are the CSP, Occam, Ease, SDL, SDL-RT, UML and BPMN, including their representation with greater focus on BPEL execution.

To specify the business rules expressions described in second-order logic can be used. The specification of the processes, of the business rules and of the extraction rules should be loaded into the core and system sensors in the startup phase, and could possibly be updated over time.

This module is also responsible for interpreting the network configuration with the identification of the elements that compose it, such as the sensor's addresses, their network configurations and addresses of the several systems to be monitored. The loaded information is persisted in the Database and the information necessary to start the Process Verification Module is sent to it, namely the specification of processes and business rules.

The Sensors Configuration Manager (14) acquires from the Database (11) the extraction rules to apply to each sensor (4,7) and using the interface with the respective sensor (10,13), sends the sensor's corresponding rules. During the system operation it constantly measures the communication response time with each sensor (Round Trip Time) and informs the Processes Verification Module. The communication time with the sensors is used to correct the temporal references for the information received from each sensor, discounting half of the Round Trip Time.

This component monitors the Database (11), and whenever there are changes in the rules it validates the need to reload rules in each sensor, this monitoring can be replaced by a direct communication between Specifications Interpreter (9) and the Sensors Configuration Manager.

The Database (11) is the component used to persist all the configuration information, as well as the information regarding the alerts to be displayed on the monitoring console. To this effect relational databases system or object-oriented database system can be used.

The Processes Verification Module (PVM) (12) is the central module of the IDS system. It is here maintained a representation of the business processes to monitor, and based on the actions created by events detected by the sensors (4,7) is herein simulated the execution of each step of the business process or processes.

When the sensors (4,7) detect indication of a previously configured action, i.e., relevant for monitoring the business process's evolution, a message is sent to the PVM (12) with the detected action including all the necessary attributes for the detailed characterization of that action. All the messages contain the indication of the time moment in which the sensor has carried out the detection, wherein the time is measured taking into account the clock differences between the sensors and the PVM and discounting the average packets network travel time for each sensor. Another type of synchronization strategy can also be used, either by means of group communication algorithms such as IP multicast or other multipoint techniques, either by means of distributed snapshot algorithms.

For each received action the PVM needs to identify the process instance to which the action corresponds since a process can have multiple simultaneous instances. One of the problems faced by the PVM is the possibility of not being possible to distinguish at which instance a given action corresponds, due to the impossibility of complete characterization of an action based on the information captured by the network and system sensors, for example, in a system that monitors several train lines a message "Train enters a station X on line Y" is received, however the message may not have the train identification, thus it is not possible to identify univocally to which train it refers being required more information. In this case it will only be possible to decide, when more information is received. To address this problem the system follows the parallel verification paths as if the action belonged to several distinct business process flows or several instances of a process, that can be completely independent from each other, operation that is called split, waiting that subsequent actions allows to identify to which of the business process flows the previous action should have been assigned.

To keep the status of the several business process flows it is necessary to implement a structure that on one hand allows to maintain this state efficiently and on the other hand allows to eliminate it, also effectively, should it proves that the action that caused the split did not belong to this flow. To do this there are several options, such as:
- The use of Software Transactional memory (STM) with support of nested transactions. The use of STM allows to maintain in parallel the state of the several instances of processes candidates to a given action so that over it the following actions can be orderly executed. Whenever an action fails for a given instance, the corresponding transaction is aborted. This process is repeated until there is only a single instance, then finishing the split;
- The use of a tree structure in which in each tree node data is kept concerning all parallel instances. For each new action verified a child node is added to the corresponding process instance tree branch. Whenever an action fails the tree branch is eliminated until only one branch remains.

If for a given action, either because it is not possible to associate it to any ongoing process, or by, although it is possible to assign it to an ongoing process, the result of this action does not correspond to a valid process state, or for some other reason its validity cannot be checked, an alarm is produced. If in consequence of an action verification, one determines that a given business rule is applicable, then it is verified. In case of failure of the verification of a business rule, an alarm is issued.

Apart from the IDS's modules previously described there is also a console that may, or may not, be integrated with the consoles of the monitored system's operational systems. The console allows the user to view the alerts, the processes' state and to manage the actual settings of all system's elements. The console connects to the core system's Database, and may also exist a TCP/IP or UDP between the Processes Verification Module and the Console, although this is not absolutely necessary since all alarms are recorded in the database.

In order to increase the understanding of the generated alarms the console shows to the operator, not only the alarm generated, but also a list of steps in the business processes prior to the incident or intrusion detection, the list of events that gave rise to a deviation of the business process, and the process's state in all the split branches in which it is involved is described. The Console can send alert notifications by email, SMS and/or Instant Messaging.

The detection of intrusions through the identification of discrepancies between the indications revealed by the information and communication systems, and the specification of the business processes, goes well beyond the safety and security of the systems involved, as it contemplates the business as a whole. This way it is possible not only to detect attacks to systems, but also attack types to the business processes that have historically been considerably difficult to detect and prevent, as is the case of attacks using social engineering.

### References

[1] Jones, A.K., Sielken, R.S., Hall, T.: Computer system intrusion detection: A survey. 1-25 (2000).
[2] Ko, C., Fink, G., Levitt, K.: Automated detection of vulnerabilities in privileged programs by execution monitoring. Tenth annual computer Security applications conference. pp. 134-144. IEEE Comput. Soc. Press (1994).
[3] Uppuluri, P., Sekar, R.: Experiences with specification-based intrusion detection. Recent advances in intrusion detection (RAID) '00. pp. 1-18 (2000).
[4] Sekar, R., Uppuluri, P.: Synthesizing fast intrusion prevention/detection systems from high-level specifications. 6 (1999).
[5] Bowen, T., Chee, D., Segal, M., Sekar, R., Uppuluri, P., Shanbag, T.: Building survivable systems: An integrated approach based on intrusion detection and confinement. DARPA information survivability symposium. pp. 1084-1099. IEEE Computer Society (2000).
[6] Sekar, R., Gupta, A., Frullo, J., Shanbhag, T., Tiwari, A., Yang, H., Zhou, S.: Specification-based anomaly detection. Proceedings of the 9th ACM conference on computer and communications security - CCS '02. p. 265. ACM Press, New York, New York, USA (2002).
[7] Cheung, S., Skinner, K., Dutertre, B., Fong, M., Lindqvist, U., Valdes, A.: Using model-based intrusion detection for SCADA networks. (2006).

The present embodiment is not, naturally, by no means restricted to the embodiments described in this document and a person with average knowledge of the area can provide many possibilities of modifications thereof without departing from the general idea, as defined in the claims.

The preferred embodiments described above are obviously combinable. The following claims define further preferred embodiments.

## Claims

1. System for detecting intrusions or incidents in networks and systems, the system for detecting intrusions or incidents **characterized by** comprising a processing core (1) and a distributed set of sensors (4,7), responsible for collecting information from networks (6) and/or systems (5); such processing core (1) comprising:
- a specification Interpreter (9) module;
- a sensors configuration manager (14) module;
- a database (11);
- a process verification module (12),
wherein the process verification module (12) is configured to receive data collected by the sensors (4, 7), which monitor a set of systems and/or networks (5, 6) which cooperate in a monitored business process, to compare the received data with the specific business process description and rules stored in the specification interpreter (9) module, thus indicating a potential intrusion or incident; and wherein the sensors configuration manager (14) module is configured to acquire from the database (11) the extraction rules of the specific business process to apply to each sensor (4, 7) in order for the sensor to collect from the monitored systems and/or networks the correspondent business process data which correspond to activities of the monitored business process.

2. System, according to claim 1, wherein the processing core (1) also comprises a sensor interface (10, 13) configured to provide the core's (1) interface to the set of sensors (4, 7).

3. System according to any of the previous claims, wherein the specification of the system and/or network business process is carried out using one or several of the following languages: CSP, Occam, Ease, SDL, SDL-RT, UML, BPEL or BPMN.

4. System according to any of the previous claims, wherein the specification of the business process rules is carried out using second-order logic.

5. System according to any of the previous claims, wherein the communication between sensors (4, 7) and the processing core (1) uses encrypted communication.

6. System according to claim 1, wherein the extraction rules are represented by regular expressions.

7. System according to claim 1, wherein the extraction rules feature an absolute or relative offset within a network packet or log file of the operation of computer application.

8. System according to claim 1, wherein the extraction rules comprise statistical characteristics of a given network traffic property.

9. Method of operation of a system according to any of claims 1 to 8, **characterized in that** the data of a business process collected by a set of sensors (4, 7) are sent to a processes validation module (12) that from the information received infers the execution of a particular activity, or activities, in a specific business process, taking into account the current state of said business process, compares the collected data, representing a system and/or network activities, with those that are in the business processes specification loaded in a specification interpreter (9) module, and determines the existence of deviations between the current activities and the previously specified activities;
wherein data are extracted from system and/or network events, concerning the state of the informational entities involved in the business processes, and it is determined whether the alteration of the informational entities state implies the failure of any of the specified business process rules; and where the comparison between an business process and its specification is performed trough a computer simulation, wherein each trace of a business process that corresponds to previously identified action is used as a hint to the execution of one activity within the business process and fed into a computer memory resident model or used to check the validity of a business process rule.

10. Method according to claim 9, wherein the events used to extract information are from operation logs of the computer applications, collected through system sensors.

11. Method according to claim 9, wherein the events used to extract information are from the analysis of network traffic in one or several network segments, collected through network sensors.

12. Method according to claim 9, wherein the events used to extract information are from other intrusion detection systems, incident detection, monitoring or alarm generation.

13. Method according to claim 9, wherein a software transactional memory with support of nested transactions is included.

14. Method according to claim 9, which comprises a tree structure which keeps data from all possible processes instances being that for each new verified action a child node is added to the branch of the corresponding process instance, and whenever an action fails the corresponding tree branch is eliminated until only one branch remains.

## Patentansprüche

1. System zur Erkennung von Eingriffen oder Ereignissen in Netzwerken und Systemen, **dadurch gekennzeichnet, dass** das System zur Erkennung von Eingriffen oder Ereignissen aus einem Verarbeitungskern (1) und einem verteilten Sensorensatz (4, 7) besteht, der dafür verantwortlich ist, Informationen aus Netzwerken (6) und/oder Systemen (5) zu sammeln, wobei dieser Verarbeitungskern (1) folgendes beinhaltet:
- ein Spezifikationsinterpreter (9) Modul;
- ein Sensoren-Konfigurationsmanager (14) Modul;
- eine Datenbank (11);
- ein Prozess-Überprüfungsmodul (12),
wobei das Prozess-Überprüfungsmodul (12) dazu vorgesehen ist, um die von den Sensoren (4, 7) gesammelten Daten zu empfangen, die ihrerseits eine Reihe von Systemen und/oder Netzwerken (5, 6) überwachen, welche mit den im Spezifikationsinterpreter (9) Modul gespeicherten, überwachten Geschäftsprozessen, Beschreibungen und Regeln kooperieren und somit potentielle Eingriffe oder Ereignisse anzeigen; und wobei das Sensoren-Konfigurationsmanager (14) Modul so ausgelegt ist, um die Extraktionsregeln des spezifischen Geschäftsprozesses aus der Datenbank (11) zu empfangen, die jedem Sensor (4, 7) übermittelt werden, damit dieser die entsprechenden Geschäftsprozessdaten aus den überwachten Systemen und/oder Netzwerken, welche den Aktivitäten des überwachten Geschäftsprozesses entsprechen, sammeln kann.

2. System gemäß Anspruch 1, wobei der Verarbeitungskern (1) auch eine Sensorschnittstelle (10, 13) enthält, die dazu vorgesehen ist, als Schnittstelle zwischen dem Verarbeitungskern (1) und dem Sensorensatz (4, 7) zu fungieren.

3. System gemäß einem der vorherigen Ansprüche, wobei die Spezifikation des Geschäftsprozesses des Systems und/oder Netzwerks durch die Verwendung von einer oder mehreren der folgenden Prozesssprachen vorgenommen wird: CSP, Occam, Ease, SDL, SDL- RT, UML, BPEL oder BPMN.

4. System gemäß einem der vorherigen Ansprüche, wobei die Spezifikation der Geschäftsprozessregeln durch die Verwendung der Prädikatenlogik zweiter Stufe vorgenommen wird.

5. System gemäß einem der vorherigen Ansprüche, wobei die Kommunikation zwischen den Sensoren (4, 7) und dem Verarbeitungskern (1) über eine verschlüsselte Kommunikation erfolgt.

6. System gemäß Anspruch 1, wobei die Extraktionsregeln mittels regulärer Ausdrücke dargestellt werden.

7. System gemäß Anspruch 1, wobei die Extraktionsregeln einen absoluten oder relativen Offset innerhalb eines Netzwerkpakets oder der Logdatei des Betriebs einer Computeranwendung aufweisen.

8. System gemäß Anspruch 1, wobei die Extraktionsregeln statistische Kennwerte einer gegebenen Netzwerkverkehrseigenschaft aufweisen.

9. Funktionsweise eines Systems gemäß einem der Ansprüche 1 bis 8, **dadurch gekennzeichnet, dass** die von einem Sensorensatz (4, 7) gesammelten Daten eines Geschäftsprozesses an ein Prozess-Überprüfungsmodul (12) gesandt werden, das aufgrund der empfangenen Informationen die Ausführung einer bestimmten Aktivität oder von bestimmtem Aktivitäten in einem spezifischen Geschäftsprozess ableitet, wobei der aktuelle Zustand des besagten Geschäftsprozesses berücksichtigt wird und die gesammelten Daten, die System- und/oder Netzwerkaktivitäten darstellen, mit den Geschäftsprozessen im Spezifikationsinterpreter (9) Modul verglichen werden, wobei das Vorhandensein von Abweichungen zwischen den aktuellen und vorher festgelegten Aktivitäten offenbar wird;
wobei Daten bezüglich des Zustands der beteiligten informativen Objekte einem System entnommen und/oder in Ereignisspezifikation geladen werden und bestimmt wird, ob die Zustandsänderung der informativen Objekte das Versagen einer der bestimmten Geschäftsprozessregeln beinhaltet; und wo der Vergleich zwischen einem Geschäftsprozess und seinen Spezifikationen durch eine Computersimulation durchgeführt wird, wobei jedes Anzeichen eines Geschäftsprozesses, das der vorher identifizierten Aktion entspricht als Hinweis auf die Ausführung einer Aktivität innerhalb des Geschäftsprozesses verwendet wird und in das in einem Computerspeicher vorhandene Modell eingespeist oder zur Überprüfung der Gültigkeit einer Geschäftsprozessregel verwendet wird.

10. Verfahren gemäß Anspruch 9, wobei die zum Erhalt der Informationen verwendeten Ereignisse aus Betriebsprotokollen der Computeranwendungen stammen, die durch Systemsensoren gesammelt werden.

11. Verfahren gemäß Anspruch 9, wobei die zum Erhalt der Informationen verwendeten Ereignisse aus der Analyse des Netzwerkverkehrs in einem oder mehreren Netzwerksegmenten stammen, die durch Systemsensoren gesammelt werden.

12. Verfahren gemäß Anspruch 9, wobei die zum Erhalt der Informationen verwendeten Ereignisse aus anderen Angrifferkennungssystemen, Störfallerkennungen, Überwachungen oder Alarmauslösungen stammen.

13. Verfahren gemäß Anspruch 9, wobei ein Transaktionaler Software Speicher mit Unterstützung von verschachtelten Transaktionen enthalten ist.

14. Verfahren gemäß Anspruch 9, welche aus einer Baumstruktur besteht, welcher Daten von allen möglichen Prozessinstanzen sammelt, wobei für jede neue überprüfte Aktion ein untergeordnetes Knoten zum Strukturzweig der entsprechenden Prozessinstanz hinzugefügt wird und immer wenn eine Aktion ausfällt, wird der entsprechende Strukturzweig entfernt, bis nur noch eine Verzweigung übrig bleibt.

## Revendications

1. Système de détection d'intrusions ou d'incidents dans des réseaux et des systèmes, le système de détection d'intrusions ou d'incidents **caractérisé en ce qu'**il comprend un coeur de processeur (1) et un ensemble réparti de capteurs (4,7), responsable de la collecte des informations sur les réseaux (6) et/ou les systèmes (5) ; un tel coeur de processeur (1) comprenant :
- un module d'Interprétation de spécifications (9) ;
- un module gestionnaire de configuration de capteurs (14) ;
- une base de données (11) ;
- un module de vérification du traitement (12),
dans lequel le module de vérification du traitement (12) est configuré pour recevoir des données collectées par les capteurs (4, 7), qui surveillent un ensemble de systèmes et/ou de réseaux (5, 6) qui coopèrent dans un traitement opérationnel surveillé, pour comparer les données reçues avec le traitement opérationnel spécifique
une description et des règles stockées dans le module d'interprétation de spécifications (9), indiquant alors une intrusion ou un incident potentiel ; et dans lequel le module gestionnaire de configuration de capteurs (14) est configuré pour acquérir à partir de la base de données (11) les règles d'extraction du traitement opérationnel spécifique à appliquer à chaque capteur (4, 7) de sorte que le capteur collecte à partir des systèmes et/ou réseaux surveillés les données de traitement opérationnel correspondantes qui correspondent aux activités du traitement opérationnel surveillé.

2. Système, selon la revendication 1, dans lequel le coeur de processeur (1) comprend également une interface de capteur (10, 13) configurée pour fournir l'interface du coeur (1) à l'ensemble de capteurs (4, 7).

3. Système selon l'une quelconque des revendications précédentes, dans lequel les spécifications du traitement opérationnel du système et/ou du réseau sont réalisées en utilisant un ou plusieurs des langages suivants : CSP, Occam, Ease, SDL, SDL- RT, UML, BPEL ou BPMN.

4. Système selon l'une quelconque des revendications précédentes, dans lequel les spécifications des règles du traitement opérationnel sont réalisées en utilisant une logique de second ordre.

5. Système selon l'une quelconque des revendications précédentes, dans lequel la communication entre les capteurs (4, 7) et le coeur de processeur (1) utilise une communication cryptée.

6. Système selon la revendication 1, dans lequel les règles d'extraction sont représentées par des expressions régulières.

7. Système selon la revendication 1, dans lequel les règles d'extraction présentent un décalage absolu ou relatif au sein d'un paquet réseau ou d'un fichier journal de l'opération d'application informatique.

8. Système selon la revendication 1, dans lequel les règles d'extraction comprennent les caractéristiques statistiques d'une propriété de trafic réseau donnée.

9. Procédé de opération d'un système selon l'une quelconque des revendications 1 à 8, **caractérisé en ce que** les données d'un traitement opérationnel collectées par un ensemble de capteurs (4, 7) sont envoyées à un module de validation de traitement (12) qui à partir des informations reçues induit l'exécution d'une ou de plusieurs activités particulières, dans un traitement opérationnel spécifique, en tenant compte de l'état actuel dudit traitement opérationnel, compare les données collectées, représentant un système et/ou des activités réseau, avec celle qui sont dans le module d'interprétation de spécifications (9) du traitement opérationnel, et détermine l'existence de d'écarts entre les activités actuelles spécifiées précédemment ;
dans lequel les données sont extraites du système et/ou chargées dans des événements de spécification concernant l'état des entités d'information impliquées et il est déterminé si l'altération de l'état des entités d'information implique la défaillance de l'une quelconque des règles du traitement opérationnel spécifié ; et
où la comparaison entre un traitement opérationnel et ses spécifications est réalisée via une simulation informatique, dans laquelle chaque trace d'un traitement opérationnel qui correspond à l'action préalablement identifiée est utilisée comme un indice pour l'exécution d'une activité dans le traitement opérationnel et introduite dans le modèle de résident en mémoire de l'ordinateur ou utilisée pour vérifier la validité d'une règle de traitement opérationnel.

10. Procédé selon la revendication 9, dans lequel les événements utilisés pour extraire des informations proviennent des journaux d'opération des applications informatiques, collectées via les capteurs du système.

11. Procédé selon la revendication 9, dans lequel les événements utilisés pour extraire les informations proviennent de l'analyse du trafic réseau dans un ou plusieurs segments de réseau, collectés via des capteurs de réseau.

12. Procédé selon la revendication 9, dans lequel les événements utilisés pour extraire les informations viennent d'autres systèmes de détection d'intrusion, de détection d'incident, de génération de surveillance ou d'alarme.

13. Procédé selon la revendication 9, dans lequel une mémoire transactionnelle logicielle avec support de transactions imbriquées est incluse.

14. Procédé selon la revendication 9, qui comprend une structure arborescente qui conserve les données de toutes les instances de traitement possibles étant donné que pour chaque nouvelle action vérifiée un noeud enfant est ajouté à la branche de l'instance de traitement correspondante, et chaque fois qu'une action échoue la branche de l'arborescence correspondante est éliminée jusqu'à ce qu'il ne reste qu'une seule branche.
